# EUROPEAN PATENT APPLICATION

(11) **EP 1 225 532 A2**
(43) Date of publication of application: **24.07.2002**
(21) Application number: 02250293.4
(22) Date of filing: 16.01.2002
(51) Int. Cl.: G06F 17/60

(54) **Delivery of time significant advertising**

(30) Priority: 23.01.2001 US 768990
(71) Applicant: Hewlett-Packard Company, Palo Alto, CA 94304 (US)
(72) Inventor: Hammerstad, Diane R., Corvallis, OR 97330 (US)
(74) Representative: Jackson, Richard Eric

(57) **Abstract**

The significance of the time value of advertising as well as its relevance to the individual's preferences is utilized by a service provider server (123) to emplace advertising (405) with time significance (409) into a desired publication (403) delivered (531) to a subscriber (103,105).

## Description

### Background of The Invention

The present invention generally relates to the method and apparatus that delivers time significant material to a user and more particularly relates to delivery of advertisements that have a time-of-day significance as well as a relationship to a user preference for the subject matter product or service of the advertisements.

Information is being made available to people at an increasing rate. It has become commonplace for news, calendars, images, and other diverse content topics to be published to individuals by way of the Internet or similar networks. This publication can be distinguished from conventional broadcasting in that broadcasting is a widespread dissemination of identical information to a large number of people while network publication can be and is a more individualized delivery of information. A good example of the individualized delivery of information is that embodied in the "Instant Delivery" service offered by Hewlett-Packard Company (and found at the Internet website http://www.instant-delivery.com). Network publication need not be bound by a wired interface, as one would expect for personal computers and Internet devices, but have expanded to PDAs (Personal Digital Assistants) and digital cellular telephones capable of wireless interconnection to the Internet.

Individualization of content tailored to the expressed preferences of a person has led to the individualization of advertising also tailored to the expressed preferences (and the inferred preferences) of the person. Catalog retailers have known of and exploited lists of persons whose shopping habits have been collated into a profile favorably disposed to the products being offered by the catalog retailer. A person on the list will receive an unsolicited catalog. Advertisers alert to the possibilities of the Internet use the same methods to target potential purchasers, but the collection and sorting of names and preferences can now be accomplished more quickly and accurately. It should be noted that much of this collection of preferences is not meant to be devious or with ill will, but done in a way that provides the individual possibilities of items and services that the individual would want rather than burdening the individual with advertisements that are for items and services that are totally unwanted. It is a fact that most publications cannot be accomplished unless they are subsidized by advertising placed along with the desired content. Thus, banner ads and margin ads are placed in most web pages offering otherwise free services and content publications have similar advertising.

Advertising offered to a nationwide audience has a disadvantage that the cross country (and international) time zones do not allow for a standard time; that is, a broadcast television program televised at 9:00 PM in the Eastern time zone would be simultaneously broadcast at 6:00 PM in the Pacific time zone, unless of course the television network (conventionally) introduced a delay in the Pacific time zone broadcast. Obviously, an advertisement that had a time-critical component for a 9:00 PM Eastern time but delayed for a Pacific time zone broadcast would have a substantial amount of its value to the Pacific time zone audience lost. Furthermore, a simultaneous broadcast in the Pacific time zone would reach a different audience than that targeted for a 9:00PM broadcast. A similar problem exists for an advertiser desiring advertisement delivered by way of the Internet.

### Summary of the Invention

Delivering content and time significant advertising to a subscriber includes the determining of an attribute of and a time significance for an advertisement. A previously stored subscriber advertising profile is recalled and compared to the advertising attribute. A current time for the subscriber is determined and compared to the time significance of the advertising. When the current time matches the time significance and the subscriber advertising profile matches the attribute, the advertising is included with the content.

### Brief Description of the Drawings

FIG. 1 is a block diagram depicting a communications arrangement that provides information delivery and which may employ the present invention.
FIG. 2 is a flowchart of a registration process that may be employed in the present invention.
FIG. 3 is a flowchart of a publication assembly process that may be employed in the present invention.
FIG. 4 is a conceptual block diagram of advertisement selection that may be employed in the present invention.
FIG. 5 is a flowchart of a process of obtaining the desired advertising that may be employed in the present invention.

### Detailed Description of a Preferred Embodiment

In order to better target advertising to an individual, the significance of time value of advertising as well as its relevance to the individual's profile is considered when it is combined with desired content predefined by the individual.

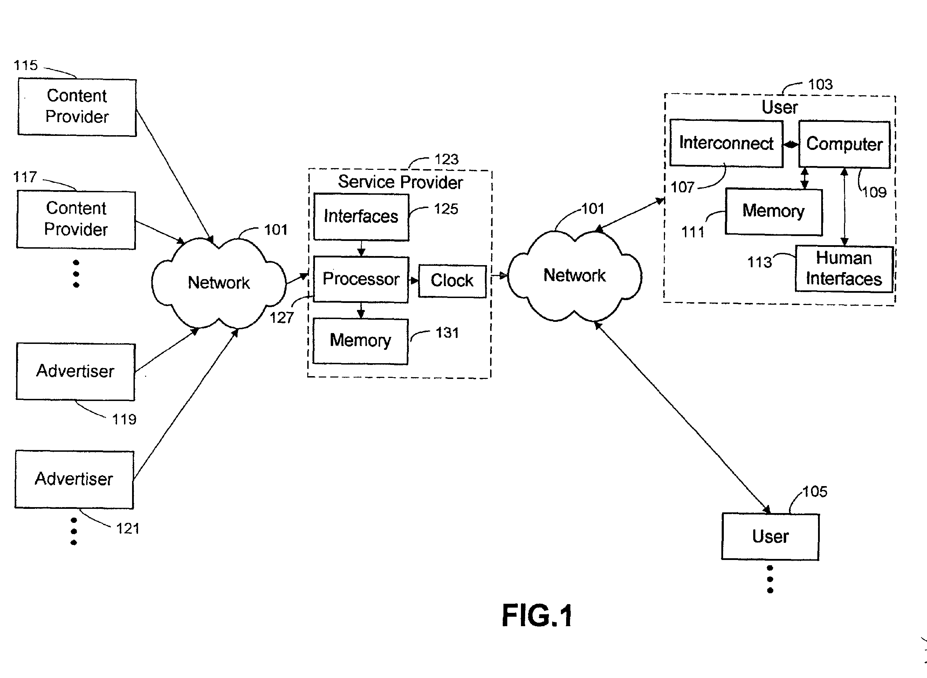

A block diagram of a communications arrangement that provides information delivery via a network is shown in FIG. 1. The network 101 in a preferred embodiment is the arrangement commonly known as the Internet but could be other implementations that provide two-way connectivity between communicating entities. Many users, for example users 103 and 105, are coupled to the network 101 by communication links such as wire, optical fiber, electromagnetic propagation and the like. The usual user employs an interconnect device 107, such as a modem, to interface between a computer 109 or a similar computing device and the communications link to the network 101. A memory 111, coupled to the computer 109, stores the operating system and applications programs for the computer as well as information and data and the like which are presented to the computer. Interface from a human to the computer 101 is achieved by human interfaces 113, which are familiar items such as a keyboard, a video monitor, a mouse, a printer, and similar devices. Other types of users, for example internet appliances, may have more or less complexity depending upon their purpose and capabilities.

While the users can be considered consumers of information available from the network (of course, this is not strictly true, since users also provide information to and interactivity with the network, but for simplification of discussion it is assumed the users are consumers of information), other entities are providers of information. One set are content providers 115, 117 who provide information, images, and similar material for consumption by users. Another set are advertisers 119, 121 who provide advertisements for products and services that may be of interest to users. Users are accustomed to interconnect one-to-one with a content provider via the network (not shown) to obtain content. Likewise, users are accustomed to interconnect one-to-one with an advertiser (or more correctly with a supplier of goods/services, a protoadvertiser) to obtain information about a product or service that the advertiser has. One-to-one interconnect can be time inefficient when a user routinely visits the site (the ultimately user-perceptible display of the content provider's and the advertiser's information) of one or more content providers and advertisers. To provide a more efficient interconnection, a service provider 123 will offer a service of gathering content from one or many content providers for the user based upon a prearranged definition of user preferences and deliver the content to the user. One method of compensating the service provider is to accept advertising inserted into the content and accept free delivery of the content and the inserted advertising. This is the method of a preferred embodiment of the present invention.

Apparatus used by a service provider can most simply be described as a server. As such, the service provider includes interfaces 125 that interconnect with the network 101, a processor 127, a standard clock 129, and memory 131 that retains operating and applications programs as well as user profiles and other materials relevant to the content providers and advertisers.

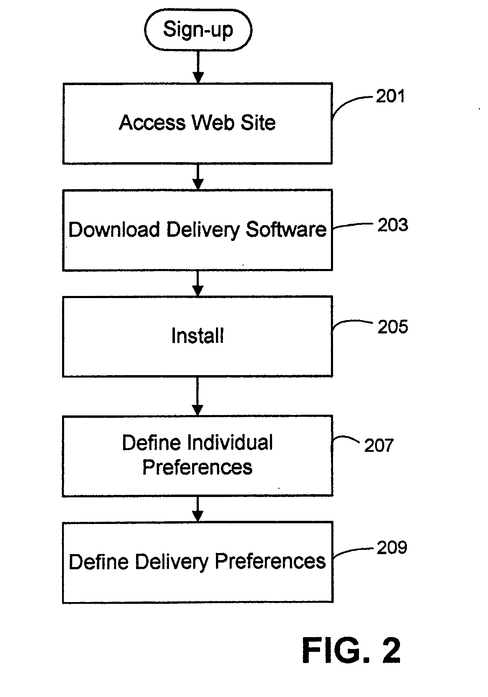

In a preferred embodiment, users sign-up or register with the service provider for the information delivery service. Such users will hereinafter be referred to as subscribers. A registration process is shown in the flowchart of FIG. 2. A user, in a fashion well known to those who browse the Internet, accesses, at 201, the web page of the service provider. Located thereon is a link to the instruction set, the software, that mediates operative interaction between the soon-to-become subscriber and the service provider. Clicking on or otherwise accessing the link results in the download, at 203, of the software to the memory 111 of the subscriber's computer 109. The nature of the downloaded software is such that the subscriber must perform an operation, at 205, commonly known as an install to place the software in a condition for use by the subscriber's computer109. As part of the install process or upon first initiating the installed delivery program, the subscriber is asked to define individual profiles, at 207, to describe the type of content the subscriber wants to have delivered and the format in which the content is to be placed for delivery to the human interfaces 113 of the subscriber. The subscriber is requested to overtly provide other information such as name, e-mail address, interests and hobbies, and other similar characterizing information. Further, for the preferred embodiment, the subscriber is requested to establish delivery characteristics, at 209, including a schedule of delivery times and days for the formatted content and a preferred template for the content and advertising. In advanced versions of a preferred embodiment and at the option of the service provider, a covert collection of content preferences may be employed to better refine the preferences of the subscriber. The term covert collection should not be taken to imply an invasion of the privacy of the subscriber. In the preferred embodiment, the subscriber is notified of the collection of preferences and is assured that the preference information will not be shared. Covert preference collection can include the collection of the general type of content being delivered to the subscriber and whether and to which type of advertisements the subscriber responds. Thus, a subscriber advertising profile (a collection of one or more preferences of the subscriber) is generated for each subscriber and saved in the memory 131 of the service provider.

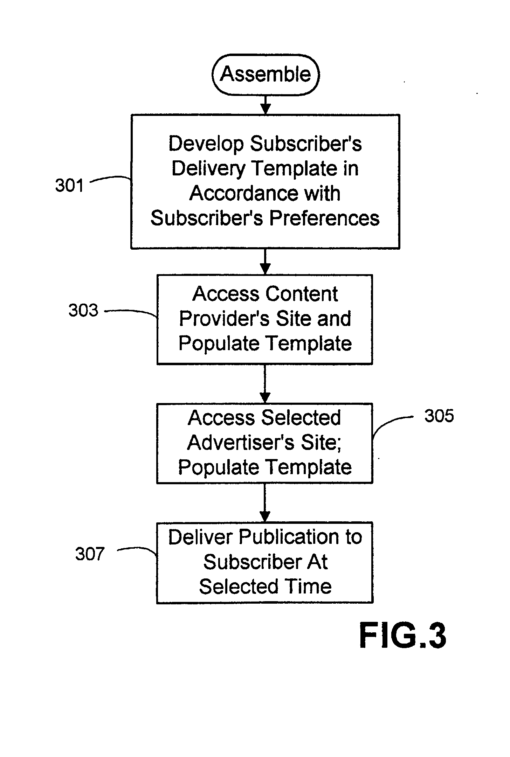

Once the subscriber content and advertising profile are stored, the actual delivery service can begin. A preferred embodiment of the present invention is utilized in a content delivery service similar to that used in the Instant Delivery service available at http://www.instant-delivery.com, although content delivery service providers with different operating characteristics can also advantageously employ the present invention. In order to prepare delivery to a subscriber, a determination of the time the delivery is to occur is extracted from the subscriber's profile or, by a request from the subscriber. The delivery publication is then assembled in a manner shown in the flowchart of FIG. 3.

The layout preferred by the subscriber is recalled from the stored subscriber profiles in order to develop the delivered publication from a publication template, at 301. In a preferred embodiment, the subscriber can decide that the delivered publication will be, for example, landscape page format with four columns of text and images and banner advertising at the bottom of the page. Of course, many different types of template can be specified by the subscriber depending upon desired content or whim. The service provider will then begin to populate the template, at 303, with content currently available and accessed at a desired content provider's website. Since the subscriber may have specified content from several content providers, the population process will repeat, accessing content providers' websites for current content, until all the desired content has been obtained and placed in the template. A similar process is followed in obtaining advertising materials from advertisers' websites. Since the subscriber's advertising profile have been stored at the service provider's memory 131, this profile are recalled and used to select advertisers who have services or products for which the subscriber has expressed and interest or for whom an interest profile has been developed based upon previous subscriber activities. The selected subscribers' websites are accessed and current advertising material is used to populate the delivery template, at 305, in the format specified by the subscriber. The completed delivery publication is then, at 307 delivered to the subscriber at the appointed time. In a preferred embodiment, the publication is delivered as a hard-copy printed medium, but alternative embodiments include viewable delivery to a video monitor, a palm-sized PDA, or the like. In at least the alternative embodiments, the advertising content is not permanently affixed to the publication but is variable and changeable with each viewing of the publication.

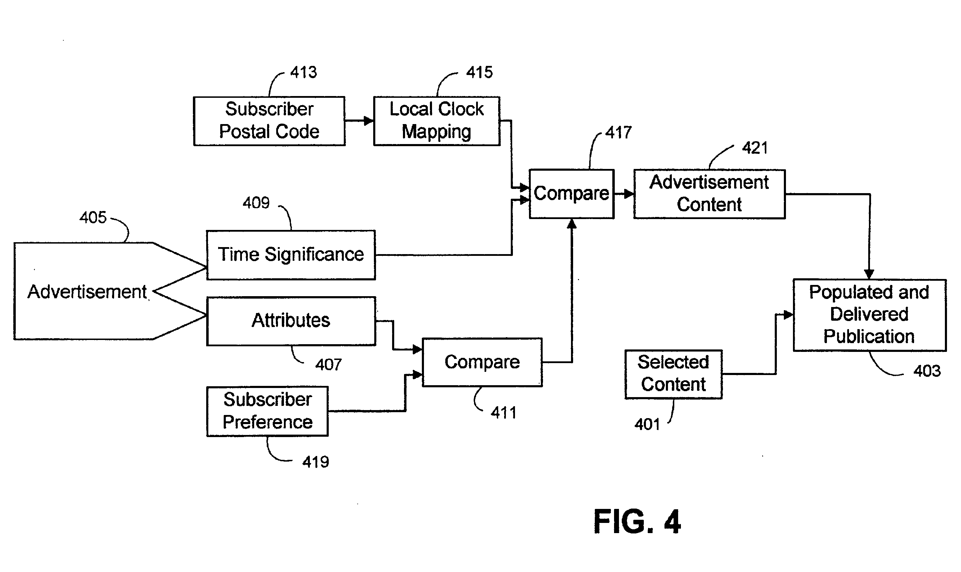

It is a feature of the present invention that the advertising added to the delivered publication be selected for, *inter alia,* time criticality of the advertising. A conceptual block diagram of advertisement selection is shown in FIG. 4. Selected content 401, which may be selected before, simultaneous with, or subsequent to the advertisement selection is used to populate the publication template for delivery 403 to the subscriber. Each advertisement, for example advertisement 405, has the actual template-inserted content resident at the advertiser's website, so that the advertiser can change the advertising content at its convenience. Advertisement attributes 407 are stored at the service provider's memory 131, while advertisement time significance 409 is maintained at the advertiser's website. It is important that the time significance be compared 411 to the subscriber's local time so that advertisement placement in the delivered publication is accomplished at a time compatible with the time significance. A example can be found below.

Determination of the subscriber's local time is not a trivial matter since the subscriber may be located in any time zone on the earth and the service provider may be located in the same or any other time zone. Moreover, some time zones may change with the season and others may have fractional hour differences. Rather than burden the subscriber with the problem of specifying a particular time zone with any regional peculiarities, a preferred embodiment of the present invention requests and stores the postal code 413 (in the United States, the ZIP code) of the subscriber as part of the subscriber's profile. When the subscriber's local time is needed, the postal code is recalled from the subscriber's profile and mapped into the local time 415.

In a preferred embodiment, a lookup table is maintained in memory 131 and associates for each postal code a time offset from Coordinated Universal Time (UTC) and a flag to change the offset for those postal codes in time zones that change for daylight savings time. Clock 129 provides a present UTC time signal, which is modified by the time offset associated with the postal code of the subscriber to yield a current local time. It is the current local time that is compared with the time significance of the advertisement and produces a positive result when the current local time falls within the window of time significance associated with the advertisement.

When there is a match of an advertisement attribute 407 associated with the advertisement and a stored subscriber profile 419 for advertisements having one or more of the attributes in a comparison 411 of them, a comparison 417 of the advertisement time significance 409 and a current local time is triggered. A positive time significance result causes advertisement content 421 is obtained from the selected advertiser's website and inserted into the publication 403 to be delivered to the subscriber along with the selected content 401.

For example, let us consider one advertiser, 119, to be Jane's Pancake House and another advertiser, 121, to be Dick's Satellite Television Broadcasting Company. In coordination with the service provider 123, Jane's makes available the following attributes for her pancake house: 1) restaurant and 2) local address and ZIP code(s) (i.e., local market). Likewise Dick's makes available the attributes: 1) entertainment, 2) television, and 3) national market. For time significance entries, Jane's makes available the requirement that her advertising content regarding service on Mother's Day be inserted into delivered publications and prominently displayed from the hours of 12:00 noon (local time) on Friday through 12:00 noon on Mother's Day Sunday. Of course, the service provider will charge an advertising premium for this service - not only does Jane's get a high priority for her advertising, but Jane's gets her message delivered during the hours she believes are most important to those wanting to know where Mother's Day breakfast is being served. Dick's time significance entries change often. Dick's wants to promote a television special being shown on a premium channel at 9:00 pm Eastern Standard Time on one satellite and at 9:00 pm Pacific Standard Time on another. Dick's wants a high priority given to his advertisement only in the one hour preceding the broadcast. Thus, it is critical that the service provider insert the advertisement of Dick's only in the delivered publications in the time zones served by the appropriate satellite and only at the proper local time for the receiving subscriber.

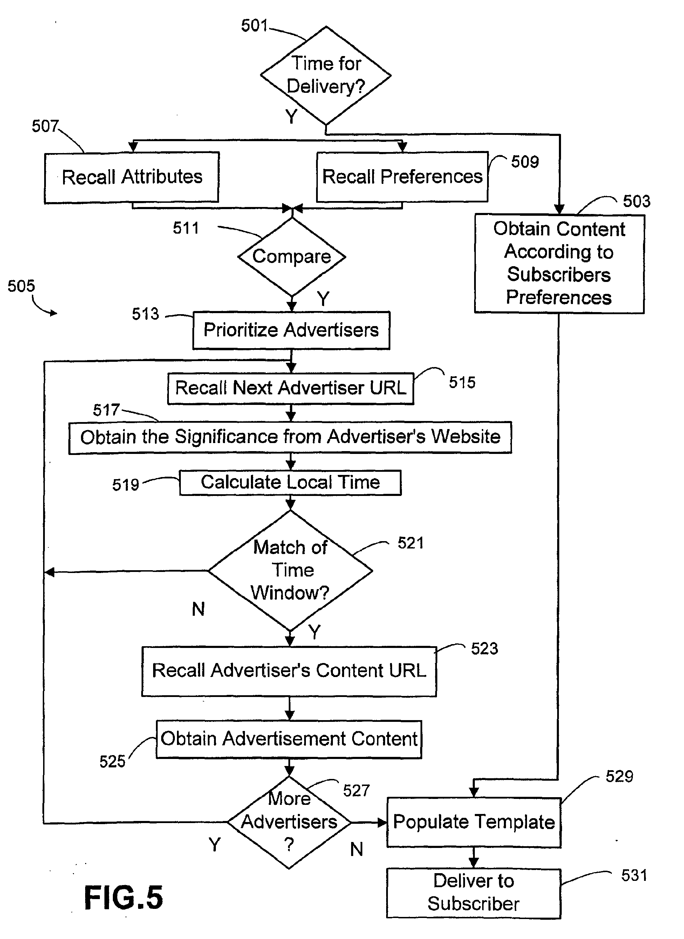

A preferred embodiment employs the process of obtaining the desired advertising depicted in the flowchart of FIG. 5. In a preferred implementation, the computer of the subscriber maintains the delivery schedule preferred by the human and automatically requests delivery from the service provider under the subscriber's computer's instruction. Alternatively, the human may request delivery in a single event request, or the predetermined delivery schedule may be maintained by the service provider or even an associated third party. Nevertheless, when it is determined, at 501, that a delivery of a publication is to be made to a subscriber, both the process of obtaining content according to the content preferences of the subscriber, at 503, and the process of obtaining advertisements that correspond to the subscriber profile, at 505 are activated at the service provider. In a preferred embodiment, priority of process is given to local, then regional, then national, then international advertisers. This priority, however, is subject to change by the service provider, and can include priorities established by premium pricing to the advertisers and advertiser competitive advertisement positioning. To obtain appropriate advertisements, both the stored attributes of the advertisers and the stored profiles of the subscriber are recalled by the service provider, at 507 and 509. The subscriber profiles are then compared, at 511, to the advertising attributes to detect matches between them. The vocabulary used in expressing preferences and attributes is limited so that matching need not be an extensive process. Thus, a subscriber having advertising preferences of "restaurant" and "television" will get matches for Jane's Pancake House (in Jane's ZIP code) and Dick's Satellite Television Broadcasting Company. A prioritization of advertisers is then made, at 513, in accordance with the service provider's policy (which may also include premium charges to the advertiser for higher priority). The Uniform Resource Locator (URL) of the first advertiser on the priority list is recalled from storage, at 515, and the URL is used to access the website of the advertiser to obtain, at 517, any time significance of the advertiser's advertisement, which is expressed as a period of time over a period of days. The subscriber's current local time is calculated, as previously described, at 519. Provided that the subscriber's current local time matches the time significance by being within the time window of significance, at 521, an advertiser's content URL (which may be the same as that used in determining time significance) is recalled, at 523, from the service provider's storage. The advertiser's website is accessed using the recalled URL and advertising content is obtained, at 525. The testing of time significance and the obtaining of advertising content continues, at 527, until the priority list is exhausted. Once all of the content and advertising content has been obtained, the subscriber predetermined publication template is populated with the information, at 529, and delivered to the subscriber, at 531.

Thus, the significance of the time value of advertising as well as its relevance to the individual's preferences is employed to emplace advertising with time significance into a desired publication.

## Claims

1. A service provider server (123) that delivers content and time significant advertising to a subscriber (103, 105) from a network (101), comprising:
a memory (131) that stores a subscriber advertising profile;
at least one network interface (125) that accesses the network to obtain an advertisement (405), an attribute (407) of said advertisement, and a time significance (409) for said advertisement;
a clock that generates a current time associated with the subscriber; and
a processor (127) coupled to said memory, said at least one network interface, and said clock and adapted to compare (411) said subscriber advertising profile to said attribute, to compare (417) said current time to said time significance, and to include (403) said advertisement with the content when said current time matches said time significance and when said subscriber advertising profile matches said attribute.

2. A service provider server in accordance with claim 1 further comprising a postal code (413) stored in said memory and associated with the subscriber, and wherein said clock is adapted to map (415) a local time zone correction established by said postal code to a time standard to generate said current time.

3. A service provider server in accordance with claim 1 wherein said time significance further comprises a time period associated with said advertisement and having time relevance to said advertisement.

4. A service provider server in accordance with claim 3 wherein said processor further includes a comparator to compare said current time to said time period to determine whether said current time is within said time period, thereby matching said time significance.

5. A service provider server in accordance with claim 1 wherein said processor is further adapted to obtain a request for delivery generated by a predetermined schedule of the subscriber, to generate said request for delivery from said predetermined schedule, and to deliver the content and said included advertisement to the user via a one of said at least one network interface in accordance with said delivery request of the subscriber, .

6. A method of delivering content and time significant advertising from a server (123) to a subscriber (103, 105) comprising the steps of:
determining an attribute of and a time significance for an advertisement;
recalling (509) a previously stored subscriber advertising profile;
comparing (411, 511) said subscriber advertising profile to said attribute;
determining (519) a current time of the subscriber;
comparing (417, 521) said current time to said time significance; and
including (403, 529) said advertisement with the content when said current time matches said time significance and said subscriber advertising profile matches said attribute.

7. A method in accordance with the method of claim 6 wherein said determining a current time further comprises the steps of:
recalling a postal code (413) associated with the subscriber; and
mapping (415) a local time zone correction established by said postal code to a time standard.

8. A method in accordance with the method of claim 6 wherein said determining an attribute further comprises the step of recalling at least one previously stored attribute associated with said advertisement.

9. A method in accordance with the method of claim 6 wherein said determining a time significance further comprises the step of recalling a previously stored time period associated with said advertisement and having time relevance to said advertisement, and wherein said comparing said current time to said time significance further comprises the step of determining whether said current time is within said time period, thereby matching said time significance.

10. A method in accordance with the method of claim 6 further comprising the steps of obtaining a request for delivery generated by a predetermined schedule of the subscriber, generating said request for delivery from said predetermined schedule, and delivering the content and said included advertisement to the user in accordance with said request of the subscriber.
